# EUROPÄISCHE PATENTSCHRIFT

(11) **EP 0 641 683 B1**
(45) Veröffentlichungstag und Bekanntmachung des Hinweises auf die Patenterteilung: **02.10.1996**
(21) Anmeldenummer: 94113947.9
(22) Anmeldetag: 06.09.1994
(51) Int. Cl.: B60J 7/20, B60R 5/04

(54) **Versenkbares Verdecksystem für Kraftfahrzeuge**
Receding folding top for a motor vehicle
Toit pliant escamotable pour un véhicule automobile

(30) Priorität: 08.09.1993 DE 4330411
(43) Veröffentlichungstag der Anmeldung: 08.03.1995
(73) Patentinhaber: WEBASTO KAROSSERIESYSTEME GmbH, D-82131 Stockdorf (DE)
(72) Erfinder: Danzl, Martin, D-80797 München (DE); Mayer, Johann, D-85238 Petershausen (DE); Weissbrich, Alfons, Dr., D-82131 Gauting (DE); Fürst, Arpad, D-82110 Germering (DE); Dworschak, Karl, D-81369 München (DE)
(74) Vertreter: Wiese, Gerhard

(56) Entgegenhaltungen:
- DE-A- 3 829 346
- DE-B- 1 224 625

## Beschreibung

Die Erfindung bezieht sich auf ein versenkbares Verdecksystem für Kraftfahrzeuge mit einem Verdeckkasten im Bereich eines Kofferraumes, wobei der Verdeckkasten eine Abgrenzvorrichtung zu seiner Abgrenzung gegenüber dem Kofferraum aufweist.

Versenkbare Verdecke von Kraftfahrzeugen und insbesondere vollversenkbare Cabrio-Verdecke aus Stoff oder Festelementen werden üblicherweise in geöffnetem Zustand in einem als Verdeckkasten bezeichneten Raum hinter den Sitzen nahe dem rückwärtigen Kofferraum verstaut oder versenkt. Der Verdeckkasten verringert das als Kofferraum zur Verfügung stehende Volumen, so daß die Lademöglichkeit oder das Ladevolumen insbesondere bei kleineren Fahrzeugen erheblich eingeschränkt wird und größere Gepäckstücke weder bei geöffnetem noch bei geschlossenem Verdeck im Kofferraum befördert werden können.

Aus der DE 38 29 346 A1 ist ein versenkbares Verdecksystem mit einem Verdeckkasten bekannt, dessen Seitenwände zumindest abschnittsweise aus elastischem, nachgiebigem Material bestehen, die in einen Teilbereich des Kofferraumes hineinragen. In Schließstellung des Verdecks ist der Verdeckkasten in senkrechter Richtung zum Teil nach oben schiebbar, so daß der Kofferraum um ein Volumen gemäß der Verschiebung vergrößert wird. Jedoch benötigt auch der teilweise zusammengeschobene Verdeckkasten ein als Kofferraum nicht nutzbares Volumen.

Der Erfindung liegt daher die Aufgabe zugrunde, ein versenkbares Verdecksystem mit einem Verdeckkasten zu schaffen, der zur Aufnahme des geöffneten Verdecks abgrenzbar ist und bei geschlossenem Verdeck vollständig als zusätzlicher Kofferraum nutzbar ist.

Diese Aufgabe wird mit den im kennzeichnenden Teil des Patentanspruchs 1 angegebenen Mitteln gelöst. Vorteilhafte Ausgestaltungen der Erfindung sind in den Unteransprüchen enthalten.

Durch Ausbildung der Abgrenzvorrichtung als Zwischenwand wird eine feste Abgrenzung oder Abtrennung geschaffen, die, wenn die Zwischenwand in einer den Verdeckkasten vom Kofferraum abgrenzenden, geschlossenen Stellung ist, eine Beschädigung des versenkten Verdecks durch Ladegut, beispielsweise beim Beladen oder durch Verlagerung von Ladegut bei starkem Bremsen, verhindert. Die Zwischenwand ist aus dieser geschlossenen Stellung in eine geöffnete Stellung schwenkbar, wenn das Verdeck geschlossen ist und der vor der Zwischenwand liegende Raum als Verdeckkasten nicht benötigt wird. Damit wird das Volumen des Kofferraums durch den Bereich des Verdeckkastens vergrößert, der zusätzlich zur Aufnahme von Gepäck verwendbar ist.

Vorzugsweise ist die Zwischenwand quer zur Längsachse des Kraftfahrzeuges und damit auch parallel zu den Sitzen (bzw. Rücksitzen) des Fahrzeuges angeordnet, um einen dem Raumbedarf des versenkten Verdecks optimal angepaßten Verdeckkasten zu bilden. Dafür ist die Zwischenwand in der geschlossenen Stellung etwa senkrecht positioniert. In ihrer geöffneten Stellung ist die Zwischenwand etwa waagrecht positioniert, um eine hindernisfreie Ladefläche zu bilden.

Es ist besonders vorteilhaft, wenn die Zwischenwand im Bodenbereich des Kofferraumes schwenkbar gelagert ist. Diese Anordnung ergibt eine einfache und stabile Konstruktion. Im geöffneten Zustand legt sich die Zwischenwand auf den Boden des Kofferraum, wo sie eine volle Ausnutzung des gesamten Kofferraums am wenigsten behindert und durch Ladegut voll belastbar ist.

Jedoch kann die Zwischenwand auch im oberen Bereich des Kofferraumes schwenkbar gelagert sein. Dann wird die Zwischenwand aus der geschlossenen Stellung nach oben geschwenkt, wo sie den erweiterten Kofferraum zum Verdeck hin abdeckt und gegebenenfalls gleichzeitig als hintere Ablagefläche (Hutablage) dient.

Es sind auch andere Lagerungen der Zwischenwand in Abhängigkeit von den räumlichen Gegebenheiten im Kofferraumbereich möglich. So kann die Zwischenwand auch derart geteilt ausgebildet und an den Seitenwänden des Kofferraums gelagert sein, daß die beiden Zwischenwandhälften einzeln nach vorne oder hinten schwenkbar sind.

Vorzugsweise ist eine Einrichtung zur Bestimmung der Stellung bzw. Position der Zwischenwand und/oder der Rücksitzlehne und/oder des Verdecks vorgesehen. Die Einrichtung kann wenigstens einen Kontaktschalter an der Zwischenwand und/oder an der Rücksitzlehne aufweisen, der bzw. die bei geöffneter Zwischenwand und/oder bei heruntergeklappter Rücksitzlehne ein das Öffnen des Verdecks verhinderndes Signal erzeugt bzw. erzeugen.

Vorzugsweise enthält das erfindungsgemäß ausgebildete Verdeck eine Verriegelungseinrichtung mit einem Mechanismus zum Verriegeln der Zwischenwand in geschlossenem Zustand und/oder einem Mechanismus zum Verriegeln der Rücksitzlehne in hochgeklapptem Zustand, wenn das Verdeck geöffnet ist, und zum Entriegeln der Zwischenwand und/oder der Rücksitzlehne, wenn das Verdeck geschlossen ist. Durch die Verriegelungsmechanismen in Verbindung mit den Kontaktschaltern wird eine Fehlbedienung und -betätigung des Verdecks und der Zwischenwand sowie der Rücksitzlehne ausgeschlossen, wodurch eine Beschädigung des Verdecks beim Versenken in den Verdeckkasten vermieden wird.

Nachfolgend ist ein Ausführungsbeispiel der Erfindung anhand der Zeichnungen beschrieben. Es zeigt:
- Fig. 1: eine Seitenansicht eines Kraftfahrzeuges in schematischer Darstellung mit versenkbarem Verdeck in geöffnetem Zustand, wobei die Zwischenwand des Verdeckkastens in geschlossener Stellung ist,
- Fig. 2: eine Ansicht nach Fig. 1 mit geschlossenem Verdeck,
- Fig. 3: eine Ansicht nach Fig. 2, wobei die Zwischenwand in herabgeklappter, waagrechter Stellung ist, und
- Fig. 4: eine Ansicht nach Fig. 3, wobei zusätzlich die Rücksitzlehnen umgeklappt sind.

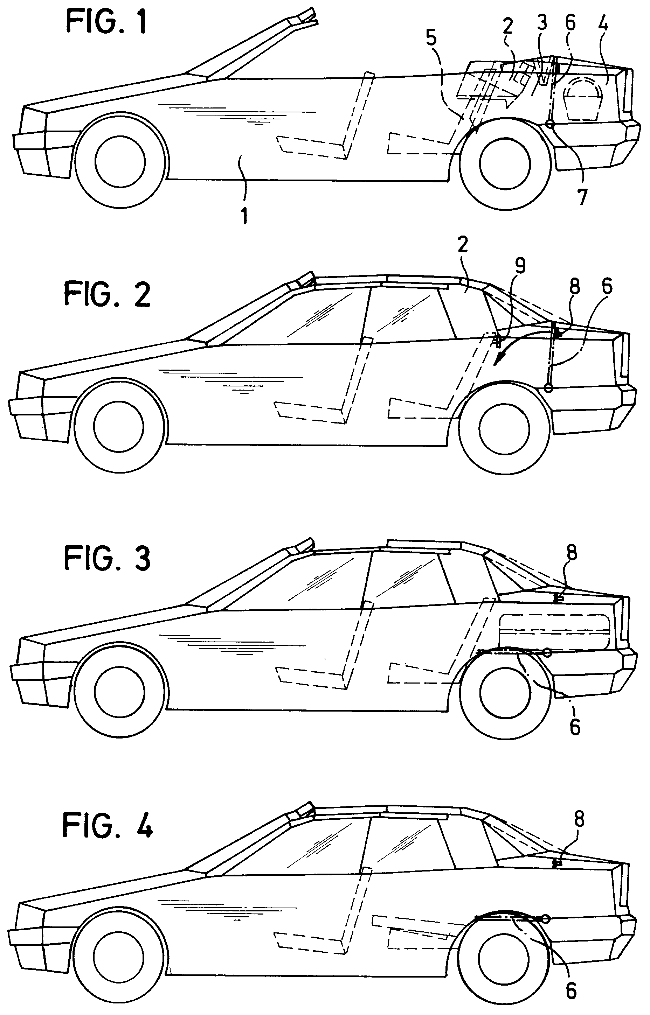

In Fig. 1 und 2 ist ein Kraftfahrzeug 1 mit einem versenkbaren Verdeck 2 dargestellt (Festelement-Cabriolet), wobei das Verdeck 2 in Fig. 2 seine geschlossene Position und in Fig. 1 seine vollständig geöffnete Position eingenommen hat. Das Verdeck 2 kann statt des Festelement-Cabrios auch ein faltbares Stoffdach sein. In der geöffneten Position ist das Verdeck 2 in einem Verdeckkasten 3 aufgenommen, der sich üblicherweise hinter den Sitzen (den Rücksitzen bei vier- oder fünfsitzigen Fahrzeugen oder direkt hinter den Vordersitzen bei zweisitzigen Fahrzeugen) befindet. Im Ausführungsbeispiel nimmt gemäß Fig. 1 der Verdeckkasten 3 einen bezüglich des Fahrzeuges 1 vorderen Teil eines Kofferraumes 4 ein, der im Heck des Fahrzeuges 1 enthalten ist. Der Verdeckkasten 3 wird nach vorne durch umklappbare Rücksitzlehnen 5 und in Richtung des Kofferraums 4 bzw. des Fahrzeughecks durch eine Zwischenwand 6 begrenzt.

Die Zwischenwand 6 ist mit zwei in ihrem unteren Randbereich angeordneten Schwenklagern 7 quer zur Längsachse des Fahrzeuges 1 am Boden des Kofferraumes 4 schwenkbar gelagert und steht in der geschlossenen Stellung, in der sie den Verdeckkasten 3 vom Kofferraum 4 abtrennt, in etwa senkrecht (wie in Fig. 1 und 2 dargestellt ist). Die Anordnungsposition des Schwenklagers 7 am Boden des Kofferraumes 4 wird durch das für die Aufnahme des geöffneten Verdecks 2 notwendige Volumen des Verdeckkastens 3 bestimmt. Die Zwischenwand 6 weist in ihrem oberen Randbereich ein Riegelteil auf, mit dem sie in ihrer senkrechten, geschlossenen Stellung an der Decke des Kofferraumes 4 oder im angrenzenden Karosseriebereich festlegbar und verriegelbar ist.

Durch die Zwischenwand 6 ist somit eine definierte, starre und festlegbare Trennung zwischen Verdeckkasten 3 und Kofferraum 4 geschaffen, so daß im Kofferraum 4 enthaltenes Ladegut mit dem Verdeck 2 in dessen geöffneter Stellung (d. h. im Verdeckkasten aufgenommen) nicht in Kontakt kommen kann und einer möglichen Beschädigung des Verdecks 2 durch Ladegut vorgebeugt wird.

An der Zwischenwand 6, beispielsweise an ihrem oberen Rand, oder am sie umgebenden Wandbereich des Kofferraumes 4 ist wenigstens ein Kontaktschalter 8 angeordnet, der bei senkrechter Stellung der Zwischenwand 6 geschlossen ist. Nur bei Vorliegen eines Signals des geschlossenen Kontaktschalters 8 ist eine Riegeleinrichtung des Verdecks 2 entriegelbar, und das Verdeck 2 ist aus seiner geschlossenen Stellung zu öffnen, wobei es in dem gegenüber dem Kofferraum 4 abgetrennten Verdeckkasten 3 aufnehm- und versenkbar ist.

Am Verdeck 2 oder an seiner Riegeleinrichtung ist ein Kontaktschalter angeordnet, der bei geschlossenem Verdeck 2 eine Entriegelung des Riegelteils der Zwischenwand 6 zuläßt. Nach dem Entriegeln ihres Riegelteils ist die Zwischenwand 6 um ihre bodenseitige Schwenkachse nach vorne (siehe Pfeil in Fig. 2) in eine in etwa waagrechte Stellung umklappbar, in der sie den Boden des Bereichs des Kofferraums 4 bedeckt (siehe Fig. 3) oder sich in eine entsprechend geformte Mulde im Boden des Kofferraumes 4 einfügt. Dadurch wird das Ladevolumen, das bei geöffnetem Verdeck 2 lediglich aus dem Kofferraum 4 besteht, um das Volumen des Verdeckkastens 3 erweitert. Zusätzlich kann ein Riegelmechanismus an der Rücksitzlehne 5 (oder den Rücksitzlehnen, wenn die Lehnen einzeln umklappbar sind) ausgelöst werden, so daß die Rücksitzlehne 5 entriegelt und nach vorne in eine annähernd waagrechte Stellung umgelegt werden kann (siehe Fig. 4), wodurch eine Verlängerung der Ladefläche und eine weitere Vergrößerung des Ladevolumens geschaffen wird, dessen Höhe nicht durch einen festen oder zusammenschiebbaren (wie in der DE 38 29 346 A1 beschriebenen) Verdeckkasten verringert wird.

Beim Schwenken der Zwischenwand 6 aus ihrer senkrechten Stellung wird der Kontaktschalter 8 geöffnet. Dadurch wird der Riegeleinrichtung des geschlossenen Verdecks 2 signalisiert, daß das Volumen des Verdeckkastens 3 als Kofferraum genutzt wird, so daß der Verdeckkasten 3 nicht zur Aufnahme des Verdecks 2 bereitsteht. Demzufolge ist die Riegeleinrichtung des Verdecks 2 nicht entriegelbar, und das Verdeck 2 kann als Ganzes nicht geöffnet werden. Eine Teilöffnung in Form eines zurückgeschobenen Deckels eines im Festelement-Cobrio integrierten Schiebedaches, die kein Versenken in den Verdeckkasten 3 erfordert, ist jedoch (wie in Fig. 3 dargestellt) möglich.

Desweiteren kann an der Rücksitzlehne 5 ein Kontaktschalter 9 angeordnet sein, der bei hochgeklappter Rücksitzlehne 5 geschlossen ist. Das Signal des Kontaktschalters 9 ist zur Betätigung der Zwischenwand 6 und des Verdecks 2 in der Art verwendbar, daß nur bei hochgeklappter Rücksitzlehne 5 (Kontaktschalter 9 geschlossen) die Zwischenwand 6 aus der waagrechten in die senkrechte Stellung schwenkbar und das Verdeck 2 entriegelbar ist. Dann ist gewährleistet, daß das Verdeck 2 in den nach vorne durch die Rücksitzlehne 5 und nach hinten durch die Zwischenwand 6 begrenzten leeren Raum des Verdeckkastens 3 versenkbar ist.

## Patentansprüche

1. Versenkbares Verdecksystem für Kraftfahrzeuge mit einem Verdeckkasten im Bereich eines Kofferraumes, wobei der Verdeckkasten eine Abgrenzvorrichtung zu seiner Abgrenzung gegenüber dem Kofferraum aufweist, **dadurch gekennzeichnet**, daß die Abgrenzvorrichtung eine Zwischenwand (6) ist, die zwischen einer den Verdeckkasten (3) vom Kofferraum (4) abgrenzenden, geschlossenen Stellung und einer bei geschlossenem Verdeck (2) den Verdeckkasten (3) als Kofferraum (4) nutzbar machenden, geöffneten Stellung schwenkbar ist.

2. Verdecksystem nach Anspruch 1, **dadurch gekennzeichnet**, daß die Zwischenwand (6) quer zur Längsachse des Kraftfahrzeuges (1) angeordnet ist und in der geschlossenen Stellung etwa senkrecht und in der geöffneten Stellung etwa waagrecht positioniert ist.

3. Verdecksystem nach Anspruch 1 oder 2, **dadurch gekennzeichnet**, daß die Zwischenwand (6) im Bodenbereich des Kofferraumes (4) schwenkbar gelagert ist.

4. Verdecksystem nach Anspruch 1 oder 2, **dadurch gekennzeichnet**, daß die Zwischenwand (6) im oberen Bereich des Kofferraumes (4) schwenkbar gelagert ist.

5. Verdecksystem nach einem der vorhergehenden Ansprüche, **dadurch gekennzeichnet**, daß es eine Einrichtung zur Bestimmung der Positionen der Zwischenwand (6) und/oder der Rücksitzlehne (5) und/oder des Verdeckes (2) aufweist.

6. Verdecksystem nach Anspruch 5, **dadurch gekennzeichnet**, daß die Einrichtung wenigstens einen Kontaktschalter (8 bzw. 9) an der Zwischenwand (6) und/oder an der Rücksitzlehne (5) aufweist, der bei geöffneter Zwischenwand (6) und/oder bei heruntergeklappter Rücksitzlehne (5) ein das Öffnen des Verdecks (2) verhinderndes Signal erzeugt.

7. Verdecksystem nach einem der vorhergehenden Ansprüche, **dadurch gekennzeichnet**, daß es eine Verriegelungseinrichtung mit einem Mechanismus zum Verriegeln der Zwischenwand (6) in geschlossenem Zustand und/oder einem Mechanismus zum Verriegeln der Rücksitzlehne (5) in hochgeklapptem Zustand, wenn das Verdeck (2) geöffnet ist, und zum Entriegeln der Zwischenwand (6) und/oder der Rücksitzlehne (5), wenn das Verdeck (2) geschlossen ist, aufweist.

## Claims

1. A retractable top system for motor vehicles with a box to house the folding top, in the region of a boot space, the top box having a device for its demarcation in respect of the boot space, characterised in that the demarcation device is an intermediate wall (6) which is pivotable between a closed position delineating the top box (3) from the boot space (4) and an open position which when the top (2) is closed allows the top box (3) to be used as a boot space (4).

2. A retractable top system according to Claim 1, characterised in that the intermediate wall (6) is disposed crosswise to the longitudinal axis of the motor vehicle (1) and is positioned substantially vertical in the closed position and substantially horizontal in the opened position.

3. A top system according to Claim 1 or 2, characterised in that the intermediate wall (6) is pivotally mounted in the bottom part of the boot space (4).

4. A top system according to Claim 1 or 2, characterised in that the intermediate wall (6) is pivotally mounted in the upper part of the boot space (4).

5. A top system according to one of the preceding Claims, characterised in that it comprises a means of determining the positions of the intermediate walls (6) and/or of the rear seat back (5) and/or of the top (2).

6. A top system according to Claim 5, characterised in that the means comprises at least one contact switch (8 or 9) on the intermediate wall (6) and/or on the rear seat back (5) which, when the intermediate wall (6) is opened and/or when the rear seat back (5) is folded down, generates a signal which prevents the top (2) being opened.

7. A top system according to one of the preceding Claims, characterised in that it comprises an interlocking means with a mechanism for locking the intermediate wall (6) in the closed condition and/or a mechanism for locking the rear seat back (5) in the raised position when the top (2) is opened and for releasing the intermediate wall (6) and/or the rear seat back (5) when the top (2) is closed.

## Revendications

1. Toit pliant escamotable pour véhicules automobiles, comportant un caisson de pliage de la capote situé près du coffre à bagages et équipé d'un dispositif délimitant le caisson par rapport à l'intérieur du coffre,
caractérisé en ce que
le dispositif délimitant le caisson est une cloison (6) qui peut basculer pour passer entre une position de fermeture dans laquelle elle sépare le caisson de pliage (3) de l'intérieur du coffre (4) et une position d'ouverture dans laquelle, lorsque la capote (2) est déployée, le caisson de pliage (3) est utilisable comme coffre à bagages (4).

2. Toit pliant selon la revendication 1,
caractérisé en ce que
la paroi intermédiaire (6) est montée transversalement par rapport à l'axe longitudinal du véhicule (1) et, en position de fermeture, se trouve disposée sensiblement à la verticale tandis qu'en position d'ouverture, elle est sensiblement horizontale.

3. Toit pliant selon la revendication 1 ou 2,
caractérisé en ce que
la cloison intermédiaire (6) est montée basculante au niveau du plancher du coffre (4).

4. Toit pliant selon la revendication 1 ou 2,
caractérisé en ce que
la cloison intermédiaire (6) est montée basculante au niveau de la partie supérieure du coffre (4).

5. Toit pliant selon une des revendications précédentes,
caractérisé en ce qu'
il est équipé d'un dispositif déterminant les positions de la cloison intermédiaire (6) et/ou du dossier (5) de la banquette arrière et/ou de la capote (2).

6. Toit ouvrant selon la revendication 5,
caractérisé en ce que
le dispositif comprend, sur la cloison intermédiaire (6) et/ou sur le dossier (5) de la banquette arrière, au moins un contacteur (8 ou 9) qui produit, lorsque la cloison intermédiaire (6) est ouverte et/ou lorsque le dossier (5) est rabattu, un signal empêchant le pliage de la capote (2).

7. Toit ouvrant selon une des revendications précédentes,
caractérisé en ce qu'
il comporte un dispositif de verrouillage équipé d'un mécanisme bloquant la cloison intermédiaire (6) en position de fermeture et/ou un mécanisme bloquant le dossier (5) de la banquette arrière en position relevée lorsque la capote (2) est pliée, ce dispositif libérant la cloison (6) et/ou la banquette (5) lorsque la capote (2) est déployée.
